# EUROPEAN PATENT SPECIFICATION

(11) **EP 4 440 856 B1**
(45) Date of publication and mention of the grant of the patent: **06.08.2025**
(21) Application number: 22822225.3
(22) Date of filing: 30.11.2022
(51) Int. Cl.: B60C 25/05, B60C 25/138

(54) **METHOD AND APPARATUS FOR TYRE CHANGING**
VERFAHREN UND EINRICHTUNG ZUM WECHSELN VON REIFEN
PROCEDEE ET APPAREIL POUR LE CHANGEMENT DES PNEUS

(30) Priority: 01.12.2021 GB 202117328
(43) Date of publication of application: 09.10.2024
(73) Proprietor: RABACONDA OÜ, 80034 Pärnu (EE)
(72) Inventor: KALLAST, Tõnu, 80034 Pärnu (EE); SAKS, Jakob, 80034 Pärnu (EE)
(74) Representative: Williams, Ben
(86) International application number: PCT/IB2022/061569
(87) International publication number: WO 2023/100087

(56) References cited:
- EP-A2- 0 141 164
- WO-A1-2019/089342
- CN-U- 214 295 431
- GB-A- 844 007
- US-A- 3 029 861

## Description

This invention relates in general to the field of tyre handling and, in particular, to methods and apparatuses for fitting and removing a tyre on a wheel rim.

### BACKGROUND OF THE INVENTION

Tyre handling apparatuses are used for fitting and removing tyres e.g. to replace a tyre which is worn or damaged with a new tyre, or to replace a tyre with another tyre which is better suited to certain conditions e.g. the weather or terrain.

It is beneficial for a tyre handling apparatus to be portable. In particular, for mobile tyre service providers, or in a competitive environment, e.g. car, UTV and buggy racing, it is important for a tyre handling apparatus to be lightweight and compact.

Existing solutions for a portable tyre handling apparatus include a fixed base to grasp and rotate the wheel rim. For these apparatuses, an external support structure is required to support a mount/demount tool, e.g. a duck head, in a suitable position to engage with the wheel rim. Such supporting structures are generally very large and heavy.

Patent documents EP0141164 and WO2019/089342 describe tyre removers that require an external support structure.

Alternatively, existing solutions may include a base section for grasping a wheel rim in place, with the duck head coaxially mounted. For these apparatuses, the duck head is generally operated with a long arm or lever to rotate around a circumference of the wheel rim. Such a lever is not compact, and the force required to drive the duck head generally means that the tyre handling apparatus must be fixed to the ground. Patent document US3029861 describes a tyre remover that requires a long arm. Patent document GB844007 describes a tyre remover requiring a solid base fixed to the ground. Patent document CN214295431 describes a tyre remover where a mount/ dismount head rotates around a wheel rim.

The present invention aims to address these problems in the state of the art.

### SUMMARY OF THE INVENTION

According to a first aspect of the present invention, there is provided a tyre handling apparatus according to claim 1.

According to a second aspect of the present invention, there is provided a method of removing a tyre from a wheel rim according to claim 17. According to a third aspect of the present invention, there is provided a method of fitting a tyre on a wheel rim according to claim 18.

Optional features are as set out in the dependent claims.

### BRIEF DESCRIPTION OF THE DRAWINGS

For a better understanding of the present invention and to show more clearly how it may be carried into effect, reference will now be made by way of example only, to the accompanying drawings, in which:
Figure 1 shows a tyre handling apparatus according to an embodiment;
Figure 2 shows a tyre handling apparatus according to an embodiment;
Figure 3 is an exploded view showing a tyre handling apparatus according to an embodiment;
Figure 4 shows a driving unit of a tyre handling apparatus according to an embodiment;
Figure 5 shows a mount/demount unit of a tyre handling apparatus according to an embodiment;
Figure 6 shows a tyre handling apparatus according to an embodiment;
Figure 7 shows a tyre handling apparatus according to an embodiment;
Figure 8 is a flowchart showing a method of removing and/or fitting a tyre on a wheel rim according to an embodiment;
Figure 9 shows a step of the method according to an embodiment;
Figure 10 shows a step of the method according to an embodiment;

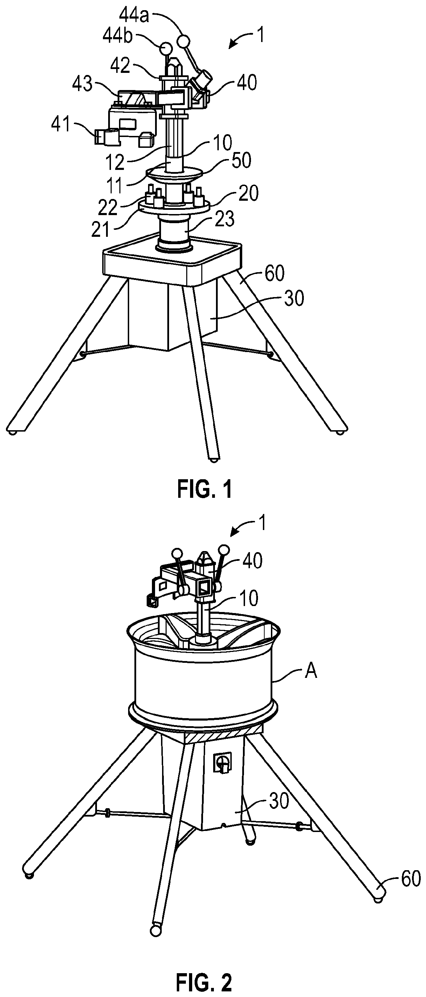

Figure 1 1 shows a step of the method according to an embodiment;

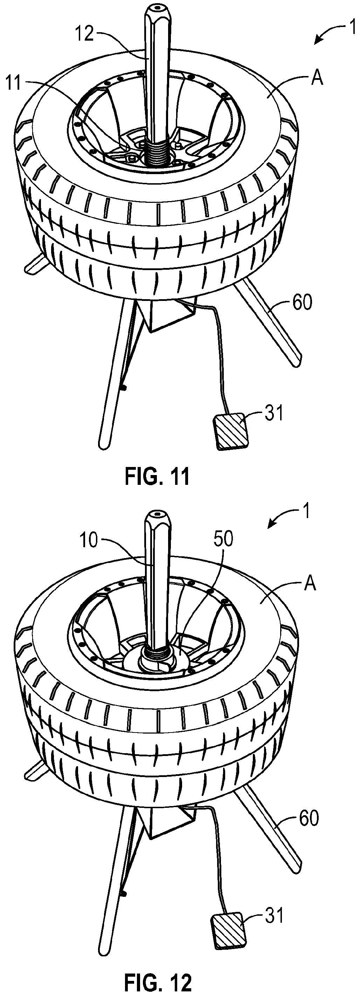

Figure 12 shows a step of the method according to an embodiment;

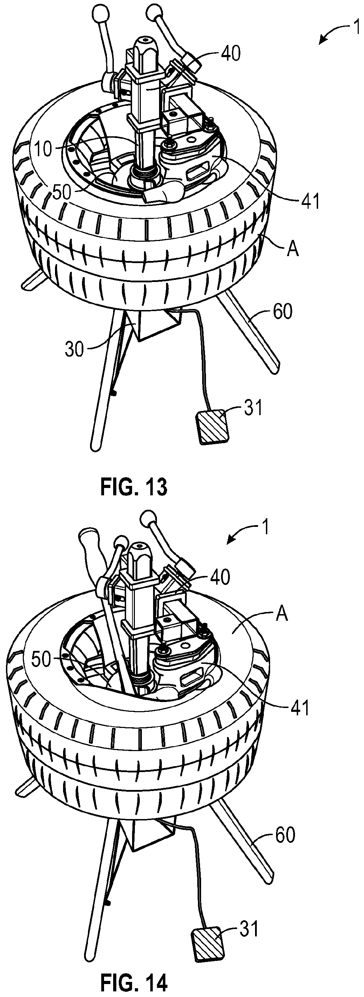

Figure 13 shows a step of the method according to an embodiment;
Figure 14 shows a step of the method according to an embodiment;

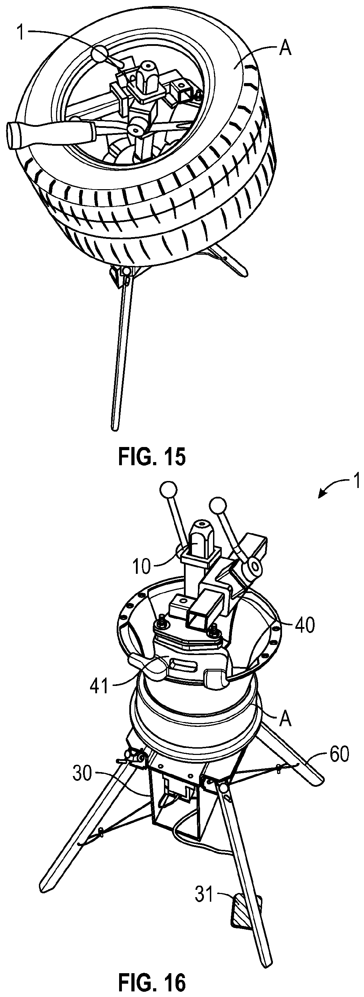

Figure 15 shows a step of the method according to an embodiment; and
Figure 16 shows a step of the method according to an embodiment.

### DETAILED DESCRIPTION OF THE INVENTION

The present invention relates to a tyre handling apparatus, and a method of removing and/or fitting a tyre on a wheel rim. In particular, the tyre handling apparatus is configured to hold a wheel rim and engage a mount/demount tool with the wheel rim to fit or remove a tyre.

Figure 1 of the accompanying drawings shows a tyre handling apparatus 1 according to an embodiment. The tyre handling apparatus 1 comprises a central axle 10, a coupling part 20, a driving unit 30 and a mount/demount unit 40.

Figure 2 of the accompanying drawings shows a tyre handling apparatus 1 according to an embodiment. As shown, the central axle 10 is configured to mount a wheel rim A.

By mounting the wheel rim A on a central axle 10 of the tyre handling apparatus 1, the tyre handling apparatus 1 can be made more compact. Furthermore, the apparatus can be well balanced around the central axle 10, reducing the amount of stabilisation required for the apparatus. This can reduce a weight required for a supporting structure of the apparatus, and avoid the need to secure the apparatus in place. In this way, implementations of the tyre handling apparatus 1 can be made portable.

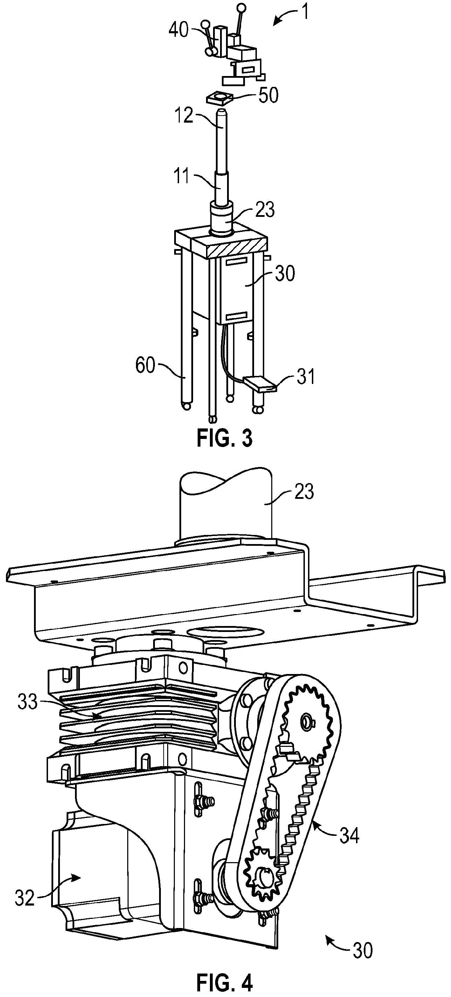

Figure 3 of the accompanying drawings shows an exploded view showing a tyre handling apparatus 1 according to an embodiment. The coupling part 20 is rotatably mounted on the central axle 10. The coupling part 20 is configured to couple to a mounted wheel rim, such that rotation of the coupling part 20 causes rotation of the wheel rim.

By rotating the wheel rim relative to the mount/demount unit 40 using a driving unit 30, the amount of torque required to overcome the frictional resistance between the tyre and the duck head can be provided with a small motor or manual driving unit. In this way, the size and weight of the apparatus can be reduced. Furthermore, a smaller driving unit with a low torque can increase stability of the apparatus, and avoid the need to secure the apparatus in place. In this way, implementations of the tyre handling apparatus 1 can be made portable.

In some embodiments, the mount/demount unit 40 may be slidably mounted on the central axle 10. In this way, the mount/demount unit 40 can be arranged at the correct position along the central axle 10 for a variety of differently sized wheel rims. Furthermore, the mount/demount can slide along the central axle 10 to disengage the mount/demount unit 40 from the wheel rim and allow demounting of a wheel rim.

In some embodiments, the mount/demount unit 40 may be configured to be demounted from an end of the central axle 10 distal from the coupling part 20. In this way, a wheel rim can be mounted on the central axle 10 between the coupling part 20 and the mount/demount unit 40. In some examples, the mount/demount unit 40 may be configured to slide off and onto one end of the central axle 10. For example, the mount/demount unit 40 or a bracket of the mount/demount unit 40 may include an opening to receive one end of the central axle 10. In some examples, the mount/demount unit 40 may be configured to clamp onto a mid-point of the central axle 10, or fix onto one of the central axle 10 with the screw and/or bolt attachment.

In some embodiments, the central axle 10 may include a first portion 11 with a circular cross-section for mounting the wheel rim and a second portion 12 with a polygonal cross-section for mounting the mount/demount unit 40. In this way, a wheel rim with a circular opening may freely rotate on the first portion 11, and the mount/demount portion may be engaged with the polygonal cross-section of the second portion 12 to fix an angular position of the mount/demount unit 40. For example, the mount/demount unit 40 may include a polygonal opening corresponding to the second portion 12, such that the second portion 12 is free to pass through the polygonal opening but restricted from rotating within the polygonal opening.

In some examples, an outer radius of the second portion 12 may be smaller than or the same as an outer radius of the first portion 11. In this way, the wheel rim may pass freely over both portions when mounted or unmounted from the central axle 10. Alternatively, in some examples, the cross-section of the central axle 10 may be polygonal along its full length, or may be generally circular with one or more flat portions to engage with the mount/demount unit 40.

Figure 4 of the accompanying drawings shows a driving unit 30 of a tyre handling apparatus 1 according to an embodiment. The driving unit 30 is configured to rotate the coupling part 20.

As described above, implementations of the tyre handling apparatus 1 can use a small motor or manual driving unit 30. In this way, the size and weight of the apparatus can be reduced. Furthermore, a smaller driving unit 30 with a lower torque can increase stability of the apparatus, and avoid the need to secure the apparatus in place. In this way, implementations of the tyre handling apparatus 1 can be made portable.

In some embodiments, the driving unit 30 may include a control unit 31 to activate and/or deactivate the driving unit 30. For example, the driving unit 30 may include an electronic switch implemented in, e.g., a floor pedal (as shown in Figure 3).

In some embodiments, the driving unit 30 may include a motor 32 and a gearbox 33. In some embodiments, the gearbox 33 may include a worm gear reducer. In this way, a low-torque, high-speed output of the motor 32 may be converted to a low-speed, high-torque rotation of the coupling part 20. In some examples, the driving unit 30 may include a chain or belt drive 34 to account for different angles of input and output of the gearbox 33. In this way, the driving unit 30 can be positioned directly below the gearbox 33, lowering a centre of mass of the tyre handling apparatus 1 and reducing the overall dimensions.

In some embodiments, the gearbox 33 may include a direct reducer. In this way, the number of components and the overall dimensions of the tyre handling apparatus 1 can be reduced.

As shown in Figure 1, the coupling part 20 may include an engaging plate 21 arranged perpendicular to the central axle 10, and a plurality of wheel studs 22 attached to the engaging plate 21 and arranged to engage with a plurality of bolt holes in the mounted wheel rim. In some examples, the engaging plate 21 may include a pattern of stud holes, allowing the plurality of wheel studs 22 to be arranged in a variety of configurations suitable for a variety of different wheel rims. Alternatively, in some examples, the coupling part 20 may include a grasping or clamping mechanism to couple with the wheel rim.

In some embodiments, the coupling part 20 may include a cylindrical sleeve 23 configured to fit around the central axle 10. The engaging plate 21 may be fixed at one end of the sleeve, and a drive wheel 24 may be fixed at the other end. The driving unit 30 may be configured to rotate the drive wheel 24. In this way, the driving unit 30 may be arranged at a point on the central axle 10 distal from the coupling part 20. The drive wheel 24, cylindrical sleeve 23 and engaging plate 21 may be fixed as a single piece to rotate together around the central axle 10. Alternatively, in some examples, the driving unit 30 may be configured to rotate the engaging plate 21 directly.

In some embodiments, a conical spacer 50 may be arranged between the mounted wheel rim and the mount/demount unit 40. The conical spacer 50 may be mounted on the central axle 10 between the mounted wheel rim and the mount/demount unit 40. The conical spacer 50 may be configured to keep the mounted wheel rim in position, by urging the wheel rim against the coupling part 20. In some examples, the conical spacer 50 may be formed with a circular cross section and a conical profile, wherein a radius of the conical spacer 50 decreases in the direction of the central axle 10. The conical spacer 50 may be arranged to have an end with the smallest radius directed to towards the wheel rim. In this way, the conical spacer 50 can be made to fit into a central opening of any size on a variety of wheel rims. In some examples, the conical spacer 50 is configured to be demounted from the central axle 10 to allow a wheel rim to be mounted onto the central axle 10.

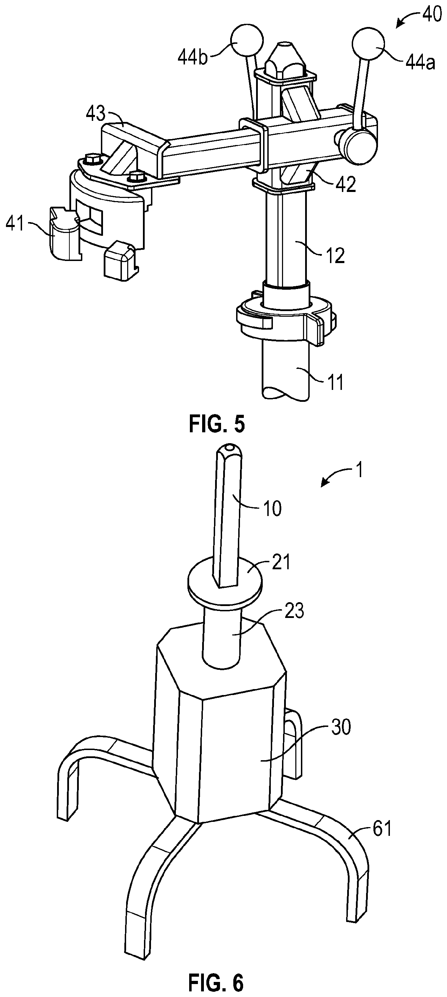

Figure 5 of the accompanying drawings shows a mount/demount unit 40 of a tyre handling apparatus 1 according to an embodiment. The mount/demount unit 40 is mounted on the central axle 10. The mount/demount unit 40 is mounted with a fixed angular position. The mount/demount unit 40 comprises a mount/demount tool 41. The mount/demount tool 41 is arranged to engage with the mounted wheel rim to fit or remove a tyre.

By arranging the mount/demount unit 40 on the central axle 10, the tyre handling apparatus 1 can be made more compact, as there are no elements required to be outside an outer circumference of a mounted tyre. The mount/demount unit 40 and a mounted wheel rim share a common axis provided by the central axle 10, so the mount/demount tool 41 can be arranged at a fixed position to engage with the mounted wheel rim. By rotating the wheel rim relative to the mount/demount unit 40, the mount/demount unit 40 can be mounted using a simple attachment with a fixed angular position, reducing the complexity of the device and allowing the mount/demount device to be easily demounted while a wheel rim is mounted onto the central axle 10.

In some embodiments, the mount/demount unit 40 may comprise a bracket 42 mounted on the central axle 10 with a fixed angular position, and a support arm 43 slidably attached to the bracket 41 and arranged to extend radially out from the central axle 10. The mount/demount tool 41 is fixed at an end of the support arm distal from the central axle 10. In this way, the mount/demount tool 41 can be arranged to engage with a variety of differently sized wheel rims. Alternatively, in some examples, the mount/demount tool 41 may be arranged at a fixed radius adapted for a specific size of wheel rim.

As shown, the mount/demount unit 40 may include one or more control levers 44. Each of the control levers 44 may be configured to engage a braking mechanism to fix a position of the mount/demount unit 40. For example, a first control lever 44a may lock a position of the support arm 43 and thus fix the radial position of the mount/demount tool 41. A second control level 44b may lock a position of the bracket on the central axle 10 and thus fix a longitudinal position of the mount/demount unit 40. In this way, the arrangement of the mount/demount unit 40 can be adjusted, and fixed in position before use. In some examples, the control levers 44 may be replaced with dials, wheels or electronic switches. In some examples, the braking mechanisms may be replaced with motorised actuators. Alternatively, one or both of the bracket 42 and support arm 43 may be fixed in position without the control levers 44.

In some embodiments, the mount/demount tool 41 may be a duck head. A duck head tool is a tool which can be used to fit the bead of a tyre onto a wheel rim, and also used to remove the tyre bead from the wheel rim. In some examples, an alternative mount/demount tool 41 may be used such as a tyre lever or similar arrangement. In this way, a single tool can be used to fit or remove a tyre. In this way the tyre handling apparatus 1 can be used to remove one tyre and fit another, e.g. a new tyre, immediately after.

In some embodiments, the tyre handling apparatus 1 may also include a plurality of supporting legs 60. In some examples, the legs 60 are attached to the driving unit 30. Alternatively, the legs 60 may be attached to the central axle 10. The tyre handling apparatus 1 may include three or four legs.

As shown in Figures 1 to 3, the legs 60 may be foldable or collapsible. In this way, the tyre handling apparatus 1 can be made portable. Alternatively, the legs 60 may be fixed in position.

Figure 6 of the accompanying drawings shows a tyre handling apparatus 1, including a plurality of fixed legs 61. Each of the legs 61 may be fixed in position at the driving unit 30. Each of the legs 61 may be formed with a bend along its length, e.g. a 90-degree curve at a point along its length. Each of the legs 61 may be formed with a flattened cross section. Each of the legs 61 may initially extend in a direction perpendicular to the central axle 10, e.g. away from the central axle 10, and curve to a direction parallel to the central axle 10. In this way, the fixed legs 61 may form a stable base to the apparatus with a low centre of gravity, such that the central axle 10 extends vertically when the legs 61 of the tyre handling apparatus 1 are placed on a flat horizontal surface.

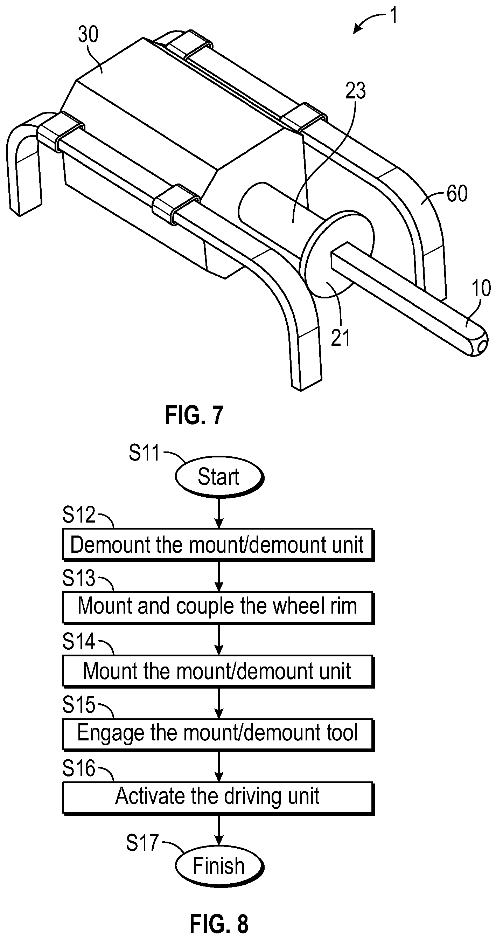

Figure 7 of the accompanying drawings shows a tyre handling apparatus 1, including a plurality of fixed legs 62. The plurality of legs 62 may be formed with a leg member forming each pair of legs 62. Each of the leg members may be formed with one or more bends along its length, e.g. a 90-degree curve at one or two points along its length. Each of the legs 62 may be formed with a flattened cross section. Each of the legs 62 may initially extend in a direction parallel to the central axle 10, e.g. along a length of the driving unit 30. Each of the leg members may be fixed in position at the driving unit 30, e.g. at one or two points along the length of the driving unit 30. Each leg member may be formed with a 90-degree curve at each end of the driving unit 30, to form a pair of legs 62. Each of the legs 62 may be curved to a direction perpendicular to the central axle 10. For example, each of the legs 62 may be curved to extend in the same direction. In this way, the fixed legs 62 may form a stable base to the apparatus with a low centre of gravity, such that the central axle 10 extends horizontally when the legs 62 of the tyre handling apparatus 1 are placed on a flat horizontal surface.

Alternatively, in some examples, the tyre handling apparatus 1 may be formed with a fixed base e.g. a flat plate or box shaped base to support the apparatus.

Figure 8 of the accompanying drawings shows a method of removing and/or fitting a tyre on a wheel rim A using the tyre handling apparatus 1 of any embodiment.

The method starts at step S11.

At step S12, the method includes demounting the mount/demount unit 40 from the central axle 10.

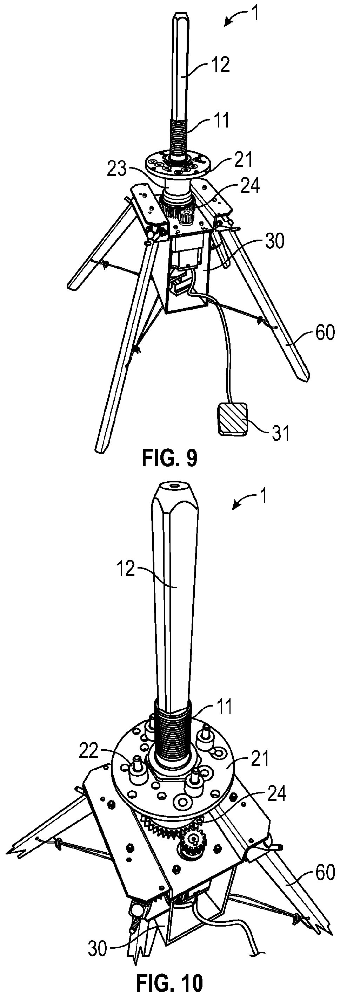

Figure 9 of the accompanying drawings shows the tyre handling apparatus 1 of an embodiment after step S12. As shown, the mount/demount unit 40 is demounted from the central axle 10.

In some embodiments, the mount/demount unit 40 may be slidably mounted on the central axle 10. In this way, the mount/demount unit 40 can slide along the central axle 10 to disengage the mount/demount tool 41 from a wheel rim and allow demounting of a wheel rim.

As shown, the central axle 10 may include a first portion 11 with a circular cross-section for mounting the wheel rim and a second portion 12 with a polygonal cross-section for mounting the mount/demount unit 41. In this way, a wheel rim with a circular opening may freely rotate on the first portion 11, and the mount/demount portion 41 may be engaged with the polygonal cross-section of the second portion 12 to fix an angular position of the mount/demount unit 41.

As shown, the coupling part 20 may include an engaging plate 21 arranged perpendicular to the central axle, with a pattern of stud holes. A plurality of wheel studs 22 may be attached to the stud holes to engage with a plurality of bolt holes in a variety of configurations suitable for a variety of different wheel rims.

Figure 10 of the accompanying drawings shows the tyre handling apparatus of an embodiment with a plurality of wheel studs 22 attached to the engaging plate 21.

At step S13, the method includes mounting the wheel rim A onto the central axle 10, and coupling the coupling part 20 to the mounted wheel rim A.

Figure 11 of the accompanying drawings shows the tyre handling apparatus 1 of an embodiment after step S13. As shown, a wheel rim A is mounted on the central axle 10.

As shown, an outer radius of the second portion 12 may be smaller than or the same as an outer radius of the first portion 11. In this way, the wheel rim A may pass freely over both portions when mounted or unmounted from the central axle 10.

In some examples, as shown, the wheel rim A may be mounted with a tyre, e.g. for removal of the tyre and/or fitting a new tyre. Alternatively, in some examples, the wheel rim A may be mounted without a tyre, e.g. for fitting a tyre to the wheel rim A.

In some embodiments, a conical spacer 50 may be arranged between the mounted wheel rim A and the mount/demount unit 40. The conical spacer 50 may be mounted on the central axle 10 between the mounted wheel rim A and the mount/demount unit 40. The conical spacer 50 may be configured to keep the mounted wheel rim A in position, by urging the wheel rim A against the coupling part 20. In some examples, the conical spacer 50 may be formed with a circular cross section and a conical profile, wherein a radius of the conical spacer decreases in the direction of the central axle. The conical spacer 50 may be arranged to have an end with the smallest radius directed to towards the wheel rim A. In this way, the conical spacer 50 can be made to fit into a central opening of any size on a variety of wheel rims. In some examples, the conical spacer 50 is configured to be demounted from the central axle 10 to allow a wheel rim A to be mounted onto the central axle 10.

Figure 12 of the accompanying drawings shows the tyre handling apparatus 1 of an embodiment with a conical spacer 50.

At step S14, the method includes mounting the mount/demount unit 40 onto the central axle 10.

In some embodiments, the mount/demount unit 40 may be slidably mounted on the central axle 10. In this way, the mount/demount tool 41 can be arranged at the correct position along the central axle 10 for a variety of differently sized wheel rims. In some examples, the mount/demount unit 40 may be configured to clamp onto a mid-point of the central axle 10, or fix onto one of the central axle 10 with a screw and/or bolt attachment.

Figure 13 of the accompanying drawings shows the tyre handling apparatus 1 of an embodiment after step S14. As shown, the mount/demount unit 40 is mounted on the central axle 10.

As shown, the mount/demount unit 40 may comprise a bracket 42 mounted on the central axle 10 with a fixed angular position, and a support arm 43 slidably attached to the bracket 42 and arranged to extend radially out from the central axle 10. The mount/demount tool 41 is fixed at an end of the support arm 43 distal from the central axle10 . In this way, the mount/demount tool 41 can be arranged to engage with a variety of differently sized wheel rims.

As shown, the mount/demount unit 40 may include one or more control levers 44. Each of the control levers 44 may be configured to engage a braking mechanism to fix a position of the mount/demount unit 40. For example, a first control lever 44a may lock a position of the support arm 43 and thus fix the radial position of the mount/demount tool 41. A second control level 44b may lock a position of the bracket 42 on the central axle 10 and thus fix a longitudinal position of the mount/demount unit 40. In this way, the arrangement of the mount/demount unit 40 can be adjusted, and fixed in position before use.

As shown, the mount/demount tool 41 may be a duck head. A duck head tool is a tool which can be used to fit the bead of a tyre onto a wheel rim A, and also used to remove the tyre bead from the wheel rim A. In this way the tyre handling apparatus 1 can be used to remove one tyre and fit another, e.g. a new tyre, immediately after.

At step S15, the method includes engaging the mount/demount tool 41 with the mounted wheel rim A to remove a tyre from the wheel rim A and/or fit a tyre to the wheel rim A.

Figure 14 of the accompanying drawings shows the tyre handling apparatus 1 of an embodiment after step S15. As shown, the mount/demount tool 41 is engaged with the mounted wheel rim A. In some examples, an additional tool, e.g. a tyre lever, may be used to engage the mount/demount tool 41. Although the mount/demount tool 41 as shown is being used to remove the tyre from the wheel rim, the same mount/demount tool 41 may be used to fit a tyre to the wheel rim.

At step S16, the method includes activating the driving unit 30 to rotate the coupling part 20.

As shown, the driving unit 30 may include a control unit 31 to activate and/or deactivate the driving unit 30. For example, the driving unit 30 may include an electronic switch implemented in, e.g., a floor pedal.

Figure 15 of the accompanying drawings shows the tyre handling apparatus 1 of an embodiment after step S16. As shown, the driving unit 30 has been activated and the coupling part 20 has been rotated. In this way, the bead of the tyre is removed from the wheel rim A.

In some examples, the method includes repeating the steps S15 and S16 for a second bead of the tyre. As shown, a tyre lever or other tool can be used to engage the mount/demount tool 41 with the other side of the mounted wheel rim A. Once engaged, the driving unit 30 may be activated for a second time.

Figure 16 of the accompanying drawings shows the tyre handling apparatus 1 of an embodiment after activating the driving unit 30 for a second time. As shown, the tyre has been removed from the wheel rim A.

In some examples, the method may include repeating the steps S15 and S16 to fit a tyre, e.g. to fit a new tyre onto the wheel rim A.

The method finishes at step S17.

Although aspects of the invention herein have been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the invention as defined by the appended claims.

## Claims

1. A tyre handling apparatus, comprising:
a central axle (10) configured to mount a wheel rim (A);
a coupling part (20) rotatably mounted on the central axle and configured to couple to a mounted wheel rim, such that rotation of the coupling part causes rotation of the wheel rim;
a driving unit (30) configured to rotate the coupling part;
a mount/demount unit (40) mounted on the central axle with a fixed angular position and comprising a mount/demount tool (41) arranged to: (i) engage with the mounted wheel rim to fit a tyre, and (ii) engage with the mounted wheel rim to remove a tyre, wherein the central axle has one or more flat portions to engage with the mount/demount unit.

2. The tyre handling apparatus of claim 1, wherein the mount/demount unit comprises:
a bracket (42) mounted on the central axle with a fixed angular position, and
a support arm (43) slidably attached to the bracket and arranged to extend radially out from the central axle;
wherein the mount/demount tool is fixed at an end of the support arm distal from the central axle.

3. The tyre handling apparatus of claim 1 or claim 2, wherein the mount/demount tool is a duck head.

4. The tyre handling apparatus of any preceding claim, wherein the mount/demount unit is slidably mounted on the central axle.

5. The tyre handling apparatus of claim 4, wherein the slidable mounting is configured such that the mount/demount unit can be arranged at the correct position along the central axle for a variety of differently sized wheel rims.

6. The tyre handling apparatus of any preceding claim, wherein the mount/demount unit is configured to be demounted from an end of the central axle distal from the coupling part, such that a wheel rim can be mounted on the central axle between the coupling part and the mount/demount unit.

7. The tyre handling apparatus of any preceding claim, wherein the central axle comprises a first portion with a circular cross-section for mounting the wheel rim and a second portion with a polygonal cross-section for mounting the mount/demount unit.

8. The tyre handling apparatus of any preceding claim, wherein the driving unit includes a motor (32).

9. The tyre handling apparatus of claim 8, wherein the driving unit further includes a direct reduction gearbox (33).

10. The tyre handling apparatus of claim 8 or 9, further including a control unit to activate and/or deactivate the driving unit

11. The tyre handling apparatus of any preceding claim, wherein the coupling part includes an engaging plate (21) arranged perpendicular to the central axle, and a plurality of wheel studs attached to the engaging plate and arranged to engage with a plurality of bolt holes in the mounted wheel rim.

12. The tyre handling apparatus of claim 11, wherein the engaging plate further includes a pattern of stud holes to allow the plurality of wheel studs to be arranged in a variety of configurations suitable for a variety of different wheel rims.

13. The tyre handling apparatus of claim 11 or 12, wherein the coupling part includes a cylindrical sleeve (23) configured to fit around the central axle,
wherein the engaging plate is fixed at one end of the sleeve, and a drive wheel (24) is fixed at the other end, and the driving unit is configured to rotate the drive wheel.

14. The tyre handling apparatus of any preceding claim, further comprising a conical spacer (50) arranged between the mounted wheel rim and the mount/demount unit.

15. The tyre handling apparatus of any preceding claim, further comprising a plurality of supporting legs (60), wherein the legs are attached to the driving unit.

16. The tyre handling apparatus of any preceding claim, wherein the legs are foldable or collapsible.

17. A method of removing a tyre on a wheel rim using the tyre handling apparatus of any preceding claim, the method comprising;
demounting the mount/demount unit from the central axle;
mounting the wheel rim onto the central axle;
coupling the coupling part to the mounted wheel rim;
mounting the mount/demount unit onto the central axle;
engaging the mount/demount tool with the mounted wheel rim to remove a tyre from the wheel rim; and
activating the driving unit to rotate the coupling part.

18. A method of fitting a tyre on a wheel rim using the tyre handling apparatus of any of claims 1 to 16, the method comprising;
demounting the mount/demount unit from the central axle;
mounting the wheel rim onto the central axle;
coupling the coupling part to the mounted wheel rim;
mounting the mount/demount unit onto the central axle;
engaging the mount/demount tool with the mounted wheel rim to fit a tyre to the wheel rim; and
activating the driving unit to rotate the coupling part.

## Patentansprüche

1. Reifenhandhabungseinrichtung, umfassend:
eine Mittelachse (10), die dazu konfiguriert ist, eine Radfelge (A) zu montieren;
ein Kopplungsteil (20), das drehbar auf der Mittelachse montiert und dazu konfiguriert ist, an eine montierte Radfelge gekoppelt zu werden, sodass eine Drehung des Kopplungsteils eine Drehung der Radfelge bewirkt;
eine Antriebseinheit (30), die dazu konfiguriert ist, das Kopplungsteil zu drehen;
eine Montage-/Demontageeinheit (40), die auf der Mittelachse mit einer festen Winkelposition montiert ist und ein Montage-/Demontagewerkzeug (41) umfasst, das zu Folgendem angeordnet ist: (i) mit der montierten Radfelge in Eingriff zu treten, um einen Reifen zu befestigen, und (ii) mit der montierten Radfelge in Eingriff zu treten, um einen Reifen zu entfernen, wobei die Mittelachse einen oder mehrere flache Abschnitte aufweist, um mit der Montage-/Demontageeinheit in Eingriff zu treten.

2. Reifenhandhabungseinrichtung nach Anspruch 1, wobei die Montage-/Demontageeinheit Folgendes umfasst:
eine Halterung (42), die auf der Mittelachse mit einer festen Winkelposition montiert ist, und
einen Stützarm (43), der verschiebbar an der Halterung angebracht und dazu angeordnet ist, sich radial von der Mittelachse heraus zu erstrecken;
wobei das Montage-/Demontagewerkzeug an einem Ende des Stützarms distal von der Mittelachse fixiert ist.

3. Reifenhandhabungseinrichtung nach Anspruch 1 oder Anspruch 2, wobei das Montage-/Demontagewerkzeug ein Entenkopf ist.

4. Reifenhandhabungseinrichtung nach einem vorhergehenden Anspruch, wobei die Montage-/Demontageeinheit verschiebbar auf der Mittelachse montiert ist.

5. Reifenhandhabungseinrichtung nach Anspruch 4, wobei das verschiebbare Montieren derart konfiguriert ist, dass die Montage-/Demontageeinheit an der richtigen Position entlang der Mittelachse für eine Vielfalt von unterschiedlich bemessenen Radfelgen angeordnet werden kann.

6. Reifenhandhabungseinrichtung nach einem vorhergehenden Anspruch, wobei die Montage-/Demontageeinheit dazu konfiguriert ist, von einem Ende der Mittelachse distal von dem Kopplungsteil demontiert zu werden, sodass eine Radfelge auf der Mittelachse zwischen dem Kopplungsteil und der Montage-/Demontageeinheit montiert werden kann.

7. Reifenhandhabungseinrichtung nach einem vorhergehenden Anspruch, wobei die Mittelachse einen ersten Abschnitt mit einem kreisförmigen Querschnitt zum Montieren der Radfelge und einen zweiten Abschnitt mit einem polygonalen Querschnitt zum Montieren der Montage-/Demontageeinheit umfasst.

8. Reifenhandhabungseinrichtung nach einem vorhergehenden Anspruch, wobei die Antriebseinheit einen Motor (32) einschließt.

9. Reifenhandhabungseinrichtung nach Anspruch 8, wobei die Antriebseinheit ferner ein Direktreduziergetriebe (33) einschließt.

10. Reifenhandhabungseinrichtung nach Anspruch 8 oder 9, ferner einschließend eine Steuereinheit zum Aktivieren und/oder Deaktivieren der Antriebseinheit.

11. Reifenhandhabungseinrichtung nach einem vorhergehenden Anspruch, wobei das Kopplungsteil eine Eingriffsplatte (21), die senkrecht zu der Mittelachse angeordnet ist, und eine Vielzahl von Radstiften, die an der Eingriffsplatte angebracht und dazu angeordnet ist, mit einer Vielzahl von Bolzenlöchern in der montierten Radfelge in Eingriff zu treten, einschließt.

12. Reifenhandhabungseinrichtung nach Anspruch 11, wobei die Eingriffsplatte ferner ein Muster aus Stiftlöchern einschließt, um zu erlauben, dass die Vielzahl von Radstiften in einer Vielfalt von Konfigurationen angeordnet ist, die für eine Vielfalt von unterschiedlichen Radfelgen geeignet ist.

13. Reifenhandhabungseinrichtung nach Anspruch 11 oder 12, wobei das Kopplungsteil eine zylindrische Hülse (23) einschließt, die dazu konfiguriert ist, um die Mittelachse zu passen,
wobei die Eingriffsplatte an einem Ende der Hülse fixiert ist und ein Antriebsrad (24) an dem anderen Ende fixiert ist und die Antriebseinheit dazu konfiguriert ist, das Antriebsrad zu drehen.

14. Reifenhandhabungseinrichtung nach einem vorhergehenden Anspruch, ferner umfassend einen konischen Abstandshalter (50), der zwischen der montierten Radfelge und der Montage-/Demontageeinheit angeordnet ist.

15. Reifenhandhabungseinrichtung nach einem vorhergehenden Anspruch, ferner umfassend eine Vielzahl von Stützbeinen (60), wobei die Beine an der Antriebseinheit angebracht sind.

16. Reifenhandhabungseinrichtung nach einem vorhergehenden Anspruch, wobei die Beine faltbar oder zusammenklappbar sind.

17. Verfahren zum Entfernen eines Reifens auf einer Radfelge unter Verwendung der Reifenhandhabungseinrichtung nach einem vorhergehenden Anspruch, wobei das Verfahren Folgendes umfasst;
Demontieren der Montage-/Demontageeinheit von der Mittelachse;
Montieren der Radfelge auf der Mittelachse;
Koppeln des Kopplungsteils an die montierte Radfelge;
Montieren der Montage-/Demontageeinheit auf der Mittelachse;
Ineingriffbringen des Montage-/Demontagewerkzeugs mit der montierten Radfelge, um einen Reifen von der Radfelge zu entfernen; und
Aktivieren der Antriebseinheit, um das Kopplungsteil zu drehen.

18. Verfahren zum Befestigen eines Reifens auf einer Radfelge unter Verwendung der Reifenhandhabungseinrichtung nach einem der Ansprüche 1 bis 16, wobei das Verfahren Folgendes umfasst;
Demontieren der Montage-/Demontageeinheit von der Mittelachse;
Montieren der Radfelge auf der Mittelachse;
Koppeln des Kopplungsteils an die montierte Radfelge;
Montieren der Montage-/Demontageeinheit auf der Mittelachse;
Ineingriffbringen des Montage-/Demontagewerkzeugs mit der montierten Radfelge, um einen Reifen an der Radfelge zu befestigen; und
Aktivieren der Antriebseinheit, um das Kopplungsteil zu drehen.

## Revendications

1. Appareil de manipulation de pneu, comprenant :
un essieu central (10) conçu pour monter une jante de roue (A) ;
une pièce d'accouplement (20) montée de manière rotative sur l'essieu central et conçue pour s'accoupler à une jante de roue montée, de sorte que la rotation de la pièce d'accouplement provoque la rotation de la jante de roue ;
une unité d'entraînement (30) conçue pour faire tourner la pièce d'accouplement ;
une unité de montage/démontage (40) montée sur l'essieu central avec une position angulaire fixe et comprenant un outil de montage/démontage (41) agencé pour : (i) venir en prise avec la jante de roue montée pour installer un pneu, et (ii) venir en prise avec la jante de roue montée pour retirer un pneu, dans lequel l'essieu central présente une ou plusieurs parties plates pour venir en prise avec l'unité de montage/démontage.

2. Appareil de manipulation de pneu de la revendication 1, dans lequel l'unité de montage/démontage comprend :
un montant (42) monté sur l'essieu central avec une position angulaire fixe, et
un bras de support (43) attaché de manière coulissante au montant et agencé pour s'étendre radialement vers l'extérieur à partir de l'essieu central ;
dans lequel l'outil de montage/démontage est fixé au niveau d'une extrémité du bras de support distale par rapport à l'essieu central.

3. Appareil de manipulation de pneu de la revendication 1 ou de la revendication 2, dans lequel l'outil de montage/démontage est une tête de canard.

4. Appareil de manipulation de pneu d'une quelconque revendication précédente, dans lequel l'unité de montage/démontage est montée de manière coulissante sur l'essieu central.

5. Appareil de manipulation de pneu de la revendication 4, dans lequel le montage coulissant est conçu de sorte que l'unité de montage/démontage peut être agencée à la position correcte le long de l'essieu central pour une variété de jantes de roue de tailles différentes.

6. Appareil de manipulation de pneu d'une quelconque revendication précédente, dans lequel l'unité de montage/démontage est conçue pour être démontée à partir d'une extrémité de l'essieu central distale par rapport à la pièce d'accouplement, de sorte qu'une jante de roue peut être montée sur l'essieu central entre la pièce d'accouplement et l'unité de montage/démontage.

7. Appareil de manipulation de pneu d'une quelconque revendication précédente, dans lequel l'essieu central comprend une première partie avec une section transversale circulaire destinée à monter la jante de roue et une seconde partie avec une section transversale polygonale destinée à monter l'unité de montage/démontage.

8. Appareil de manipulation de pneu d'une quelconque revendication précédente, dans lequel l'unité d'entraînement comprend un moteur (32).

9. Appareil de manipulation de pneu de la revendication 8, dans lequel l'unité d'entraînement comprend en outre une boîte de vitesses à réduction directe (33).

10. Appareil de manipulation de pneu de la revendication 8 ou 9, comprenant en outre une unité de commande pour activer et/ou désactiver l'unité d'entraînement.

11. Appareil de manipulation de pneu d'une quelconque revendication précédente, dans lequel la pièce d'accouplement comprend une plaque de mise en prise (21) agencée perpendiculairement à l'essieu central, et une pluralité de goujons de roue attachés à la plaque de mise en prise et agencés pour venir en prise avec une pluralité de trous de boulon dans la jante de roue montée.

12. Appareil de manipulation de pneu de la revendication 11, dans lequel la plaque de mise en prise comprend en outre un motif de trous de goujon pour permettre à la pluralité de goujons de roue d'être agencés dans une variété de configurations appropriées pour une variété de jantes de roue différentes.

13. Appareil de manipulation de pneu de la revendication 11 ou 12, dans lequel la pièce d'accouplement comprend un manchon cylindrique (23) conçu pour s'installer autour de l'essieu central,
dans lequel la plaque de mise en prise est fixée à une extrémité du manchon, et une roue d'entraînement (24) est fixée à l'autre extrémité, et l'unité d'entraînement est conçue pour faire tourner la roue d'entraînement.

14. Appareil de manipulation de pneu d'une quelconque revendication précédente, comprenant en outre une entretoise conique (50) agencée entre la jante de roue montée et l'unité de montage/démontage.

15. Appareil de manipulation de pneu d'une quelconque revendication précédente, comprenant en outre une pluralité de jambes de support (60), dans lequel les jambes sont attachées à l'unité d'entraînement.

16. Appareil de manipulation de pneu d'une quelconque revendication précédente, dans lequel les jambes peuvent être pliées ou repliées.

17. Procédé de retrait d'un pneu sur une jante de roue à l'aide de l'appareil de manipulation de pneu d'une quelconque revendication précédente, le procédé comprenant ;
le démontage de l'unité de montage/démontage à partir de l'essieu central ;
le montage de la jante de roue sur l'essieu central ;
l'accouplement de la pièce d'accouplement à la jante de roue montée ;
le montage de l'unité de montage/démontage sur l'essieu central ;
la mise en prise de l'outil de montage/démontage avec la jante de roue montée pour retirer un pneu à partir de la jante de roue ; et
l'activation de l'unité d'entraînement pour faire tourner la pièce d'accouplement.

18. Procédé d'installation d'un pneu sur une jante de roue à l'aide de l'appareil de manipulation de pneu de l'une quelconque des revendications 1 à 16, le procédé comprenant ;
le démontage de l'unité de montage/démontage à partir de l'essieu central ;
le montage de la jante de roue sur l'essieu central ;
l'accouplement de la pièce d'accouplement à la jante de roue montée ;
le montage de l'unité de montage/démontage sur l'essieu central ;
la mise en prise l'outil de montage/démontage avec la jante de roue montée pour installer un pneu sur la jante de roue ; et
l'activation de l'unité d'entraînement pour faire tourner la pièce d'accouplement.
